Europäisches Patentamt

European Patent Office

Office européen des brevets

(19)

(11) Veröffentlichungsnummer: **0 007 978**
**B1**

(12) # EUROPÄISCHE PATENTSCHRIFT

(45) Veröffentlichungstag der Patentschrift:
**21.04.82**

(21) Anmeldenummer: **79101601.7**

(22) Anmeldetag: **24.05.79**

(51) Int. Cl.³: **C 08 J 11/00, C 08 L 75/04**

(54) **Verfahren zur schonenden Aufarbeitung von Abfällen, die aus Umsetzungsprodukten von Isocyanatgruppen enthaltenden organischen Verbindungen mit Alkoholen und/oder Wasser bestehen.**

(30) Priorität: **05.08.78 DE 2834431**

(43) Veröffentlichungstag der Anmeldung:
**20.02.80 Patentblatt 80/4**

(45) Bekanntmachung des Hinweises auf die Patenterteilung:
**21.04.82 Patentblatt 82/16**

(84) Benannte Vertragsstaaten:
**BE FR GB IT NL**

(56) Entgegenhaltungen:
**US-A-3 983 087**
**US-A-4 110 266**

(73) Patentinhaber: **Th. Goldschmidt AG,
Goldschmidtstrasse 100, D-4300 Essen (DE)**

(72) Erfinder: **Lidy, Werner, Dr., Walmanger 32 - 36,
D-4300 Essen (DE)**
Erfinder: **Rossmy, Gerd, Dr., Im Hadkamp 18,
D-4358 Haltern-Lavesum (DE)**
Erfinder: **Kollmeier, Hans-Joachim, Dr.,
Barkhorstrücken 27, D-4300 Essen (DE)**

EP 0 007 978 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur schonenden Aufarbeitung von Abfällen, die aus Umsetzungsprodukten
von Isocyanatgruppen enthaltenden organischen Verbindungen mit Alkoholen und/oder
Wasser bestehen

Die Erfindung betrifft ein Verfahren zur schonenden Aufarbeitung von Abfällen, die aus Umsetzungsprodukten von Isocyanatgruppen enthaltenden organischen Verbindungen mit Alkoholen und/oder Wasser bestehen. Sie betrifft insbesondere ein Verfahren zur schonenden Aufarbeitung von Polyurethanabfällen. Polyurethanabfälle entstehen in verhältnismäßig großer Menge in Form von Schaumstücken, z. B. bei der Herstellung von Polsterelementen. Man erhält ferner Polyurethanabfälle bei der Herstellung von Hartschaumtafeln oder stoßabsorbierenden Teilen.

Die Beseitigung von Polyurethanabfällen in Schaumform ist von besonderem Interesse, da diese Abfälle auf Grund ihrer niedrigen Dichte ein großes Volumen einnehmen und schlecht gelagert werden können. Das Verbrennen der Abfälle führt zu Umweltbelästigung und zum Verlust der eingesetzten Rohstoffe.

Man hat deshalb bereits nach verschiedenen Wegen gesucht, derartige Polyurethanabfälle unter Wiedergewinnung der Ausgangsstoffe aufzuarbeiten. Man hat beispielsweise zunächst Polyurethanschaumabfälle bei Temperaturen bis zu 400°C im geschlossenen System der Einwirkung von Wasser ausgesetzt. Hierbei tritt ein teilweise hydrolytischer Abbau des Schaumgerüstes auf. Das Verfahren hat jedoch im wesentlichen zwei Nachteile. So entsteht ein aus zwei Phasen bestehendes Abbauprodukt, wobei die eine Phase im wesentlichen aus der Polyolkomponente des Schaumstoffes und die zweite Phase im wesentlichen aus der Aminkomponente des Schaumstoffes besteht. Die Trennung beider Phasen ist jedoch außerordentlich schwierig und nur unvollständig durchzuführen. Ein weiterer Nachteil besteht darin, daß die Polyolkomponente, welche zur Verschäumung wiederverwendet werden soll, nur mit erheblichem Aufwand von dem in ihr befindlichen Wasser befreit werden kann. Dieser verbleibende Wassergehalt stört jedoch die spätere Verwendbarkeit als Schaumbildungskomponente. Die Notwendigkeit der Einwirkung von Temperaturen bis zu 400°C fördert auch die Bildung von thermischen Abbauprodukten des Schaumstoffes, welche die anwendungstechnischen Eigenschaften der wiederzuverwendenden Polyolkomponente beeinträchtigen.

Es sind Verfahren bekanntgeworden, dieses Hydrolyseverfahren zu verbessern. So ist beispielsweise in der DE-A-2 362 921 ein Verfahren zur Umwandlung von Polyurethanschaum in Diamine und ein flüssiges polymeres Hydrolyseprodukt des Polyurethans unter gleichzeitiger Abtrennung der Diamine von dem flüssigen polymeren Hydrolyseprodukt beschrieben, wobei a) der Polyurethanschaum in eine bei einer Temperatur im Bereich von etwa 218 bis 400°C (425 bis 750°F) gehaltene geschlossene Reaktionszone eingeführt wird, b) Wasserdampf in die Reaktionszone in einer ausreichenden Menge eingeführt wird, um bei dieser Temperatur einen Druck in der Reaktionszone im Bereich von etwa 0,5 bis etwa 1,5 bar zu ergeben, c) der gasförmige Abstrom aus der Reaktionszone, der Wasserdampf und die Diamine enthält, entfernt wird, und d) das flüssige polymere Hydrolyseprodukt des Polyurethans aus der Reaktionszone entfernt wird. Bei diesem Verfahren gelingt zwar die Trennung des Aminanteiles von der Polyolkomponente des hydrolytisch gespaltenen Schaumstoffes, jedoch ist nach wie vor eine Reaktionstemperatur bis zu 400°C erforderlich. Ferner verbleibt der Nachteil der Notwendigkeit, das in dem Polyol enthaltene Wasser vor der Wiederverwendung des Polyols zu entfernen.

Es ist deshalb auch bereits versucht worden, das für den Abbau des Polyurethanschaumes bisher verwendete Wasser durch einen mehrwertigen Alkohol zu ersetzen. Verwendet man an Stelle von Wasser z. B. einen geradkettigen zweiwertigen Alkohol wie Äthylenglykol, so gelingt zwar der Abbau, man erhält jedoch wiederum ein aus zwei Schichten bestehendes Abbauprodukt, welches sehr schlecht voneinander zu trennen ist.

Gegenstand der US-A-3 983 087 ist ein Verfahren zum Abbau von Polyurethanschaumabfällen zu einer homogenen Mischung von Polyolen unter Verwendung von verzweigten Alkylenglykolen wie z. B. 1,2-Propylenglykol. Hierbei wird der Polyurethanschaum mit bis zu gleichen Gewichtsteilen Propylenglykol bei Temperaturen von 180 bis 250°C aufgeschlossen, wobei eine einheitliche homogene Phase entsteht. Ein wesentlicher Nachteil dieses Verfahrens besteht darin, daß das Abbauprodukt Propylenglykol enthält, welches bei Wiederverwendung des erhaltenen Polyols als Schaumstoffkomponente zu Störungen bei der Schaumbildung Anlaß gibt. Eine bevorzugte Ausführungsform des in der vorgenannten US-A-3 983 087 beschriebenen Verfahrens besteht deshalb darin, daß man auf das Propylenglykol enthaltende Abbauprodukt Alkylenoxid einwirken läßt, um das Propylenglykol in höhermolekulare Verbindungen zu überführen.

Aus der DE-A-2 534 465 ist schließlich ein Verfahren zur Rückgewinnung von Polyolen aus Polyurethanen beschrieben, welches dadurch gekennzeichnet ist, daß man ein Polyurethan in einem aliphatischen Diol mit einem Molekulargewicht von ungefähr 400 bis 3000 und einem Siedepunkt von mindestens 180°C löst und das Gemisch in Gegenwart eines halogenierten Phosphorsäureesters auf ungefähr 170 bis 250°C erhitzt, wobei das Gewichtsverhältnis von aliphatischem Diol zu halogeniertem Phosphorsäureester 1 : 1 bis 20 : 1 beträgt. Das Verfahren hat jedoch den Nachteil, daß wiederum ein zweiphasiges, wenn auch verhältnismäßig gut trennbares Aufarbeitungsprodukt entsteht. Man benötigt für die Aufarbeitung die relativ teueren halogenierten Phosphorsäureester, welche auch aus physiologischen Gründen nicht unbedenklich sind.

Gelegentlich ist man auch gezwungen, Isocyanate, die infolge Verunreinigungen oder aus sonstigen Gründen nicht mehr verwendbar sind, in eine deponierbare Form zu überführen. Hierzu kann man sie mit Wasser umsetzen. Die Überführung dieser Abfallstoffe in technisch verwendbare Verbindungen ist ebenfalls wünschenswert.

Der vorliegenden Erfindung liegt daher die Aufgabe zugrunde, ein schonendes Aufarbeitungsverfahren für Abfälle, die aus Umsetzungsprodukten von Isocyanatgruppen enthaltenden organischen Verbindungen mit Alkoholen und/oder Wasser bestehen, insbesondere für Polyurethanabfälle zu finden, wobei das erhaltene Abbauprodukt als Polyolkomponente direkt der Wiederverwertung zugeführt werden kann, ohne daß es getrocknet oder in sonstiger Weise aufgearbeitet werden muß. Dabei soll bei dem Verfahren die Bildung von mehrphasigen Abbauprodukten vermieden werden.

Überraschenderweise gelingt dies erfindungsgemäß dadurch, daß man die Abfälle mechanisch zerkleinert und auf die zerkleinerten Abfälle in einem geschlossenen Reaktor bei Temperaturen von 120 bis 200°C mindestens 20 Gew.-%, bezogen auf die Abfälle, Äthylenoxid und/oder Propylenoxid einwirken läßt und danach gegebenenfalls nichtumgesetztes Alkylenoxid entfernt. Vorzugsweise läßt man auf die Abfälle 100 Gew.-%, bezogen auf die Abfälle, Äthylenoxid und/oder Propylenoxid einwirken. Bevorzugt ist beim erfindungsgemäßen Verfahren die Verwendung von Propylenoxid.

Die Zerkleinerung der Abfälle kann in einer Messermühle erfolgen. Die Teilchengröße der zerkleinerten Abfälle liegt dabei im Bereich weniger Kubikzentimeter und darunter.

Beim erfindungsgemäßen Verfahren wird das gesamte Abfallmaterial, gleichgültig, ob es sich um Polyurethanschaumstoff oder, bei Umsetzungsprodukten mehrwertiger Isocyanate mit Wasser, um Polyharnstoffverbindungen handelt, in eine homogene, viskose, hellfarbene bis mittelbraune Flüssigkeit umgewandelt. Auch bei längerem Stehen ist eine Trennung in verschiedene Phasen nicht zu beobachten.

Es kann angenommen werden, daß sich das Alkylenoxid an die NH-Gruppen der Urethane bzw. des im Schaumstoff enthaltenen Harnstoffes anlagert, wobei zusätzliche Umesterungsreaktionen eintreten können.

Arbeitet man nach dem erfindungsgemäßen Verfahren Polyurethanschaumstoffabfälle auf, können diese ohne weitere Behandlung frischem Polyol als hydroxylgruppenhaltige Komponente für die Umsetzung mit Polyisocyanat in Mengen bis zu 50 Gew.-%, bezogen auf frisches Polyol, zugesetzt werden.

Es ist auch möglich und im Rahmen des erfindungsgemäßen Verfahrens bevorzugt, die Polyurethanabfälle in einem Polyol in Mengen von 10 bis 50 Gew.-%, bezogen auf Polyol, zu verteilen und dieses Gemisch der Reaktion mit Alkylenoxid zu unterwerfen. Es entsteht hierbei ein Verfahrensprodukt, das direkt mit Polyisocyanat umgesetzt werden kann. Die zur Dispergierung verwendete Polyolkomponente entspricht dabei zweckmäßigerweise der in dem abzubauenden Polyurethan enthaltenen Polyolkomponente. Als Polyol kann somit bevorzugt Glycerin, Pentaerythrit, Succrose, Sorbit verwendet werden. Bei dieser Arbeitsweise erfolgt ein besonders schonender und schneller Abbau der Polyurethanabfälle.

Die Einwirkung des Alkylenoxids auf die Polyurethanabfälle erfolgt so, daß den Polyurethanabfällen, bezogen auf diese, mindestens 20 Gew.-% Alkylenoxid entsprechen. Verwendet man einen Überschuß an Alkylenoxid, welcher unter den Verfahrensbedingungen nicht an die Abfälle angelagert wird, ist es zweckmäßig, den Alkylenoxidüberschuß bei vermindertem Druck abzudestillieren und insbesondere bei größeren Ansätzen durch Kondensation wiederzugewinnen.

Das erfindungsgemäße Verfahren kann bei geeigneter Ausgestaltung der zu seiner Ausführung notwendigen Vorrichtungen kontinuierlich geführt werden, indem dem Reaktionsraum eine Dispersion des Schaumstoffes im Polyol zugeführt und eine entsprechende Menge Alkylenoxid in den Reaktor eingebracht wird. Das Reaktionsgut kann mit Hilfe einer Schnecke durch den Reaktionsraum geführt werden. Am Ende des Reaktors wird es entnommen und vom überschüssigen Alkylenoxid befreit, welches in die Eingangszone des Reaktors wieder eingeführt wird.

Das erfindungsgemäße Verfahren kann insbesondere bei der Aufarbeitung von Polyurethanschaumstoffen auf Basis von Polyäther- oder Polyesterpolyolen mit Vorteil eingesetzt werden. Die erhaltenen Abbauprodukte können ohne Beeinträchtigung der Schaumqualität frischem Polyol in Mengen von 10 bis 30 Gew.-% zugesetzt werden.

Die folgenden Beispiele erläutern das erfindungsgemäße Verfahren. Dabei wird in den Beispielen der Abbau zweier Schäume A und B beschrieben, welche nach folgender Rezeptur erhalten worden sind:

3

Schaum A ist ein Hartschaum und wurde nach folgender Rezeptur erhalten:

| 100 Gewichtsteile | Polyäther auf Basis Succrose, OH-Zahl 520, |
|---|---|
| 1 Gewichtsteil | Wasser, |
| 3 Gewichtsteile | Triäthylamin, |
| 1 Gewichtsteil | Polysiloxanpolyoxyalkylenblockmischpolymerisat-Stabilisator, |
| 40 Gewichtsteile | Trichlorfluormethan, |
| 155 Gewichtsteile | rohes Methylen-bis-phenylisocyanat. |

Schaum B ist ein Weichschaum und wurde nach folgender Rezeptur erhalten:

| 100 Gewichtsteile | Polyäther mit einem Molgewicht von 3500 auf Basis Glycerin, umgesetzt mit einem Gemisch aus Äthylenoxid und Propylenoxid, |
|---|---|
| 4 Gewichtsteile | Wasser, |
| 0,2 Gewichtsteile | Zinnoctoat, |
| 0,2 Gewichtsteile | Dimethyläthanolamin, |
| 0,8 Gewichtsteile | Polysiloxanpolyoxyalkylenblockmischpolymerisat-Stabilisator, |
| 48,4 Gewichtsteile | Toluoldiisocyanat mit einem Isomerenverhältnis 80/20. |

## Beispiel 1

100 g des Schaumes A werden in einer Messermühle zerkleinert und zusammen mit 200 g Propylenoxid in einen 500 ml Autoklaven gefüllt. Die Mischung wird unter Rühren 12 Stunden auf 120°C erhitzt. Dem erkalteten Autoklaven wird das Umsetzungsprodukt in Form einer homogenen Flüssigkeit entnommen und im Vakuum von überschüssigem Propylenoxid befreit. Die OH-Zahl des Endproduktes ist 340 mg KOH/g.

## Beispiel 2

100 g des zerkleinerten Schaumes B werden im Autoklaven zusammen mit 250 g Äthylenoxid 6 Stunden auf 120°C erhitzt. Das von überschüssigem Äthylenoxid befreite Endprodukt hat die OH-Zahl 226 mg KOH/g und stellt eine homogene Flüssigkeit dar.

## Beispiel 3

100 Gewichtsteile des zerkleinerten Schaumes B werden in 500 Gewichtsteilen eines Polyäthers, wie er zur Herstellung des Schaumes B verwendet worden war, dispergiert und im Autoklaven zusammen mit 200 g Propylenoxid 10 Stunden auf 120°C erhitzt. Das von überschüssigem Propylenoxid befreite Endprodukt hat die OH-Zahl 87 mg KOH/g. Es ist eine viskose Flüssigkeit.

Aus dem so erhaltenen Endprodukt wurde wiederum ein Schaumstoff nach folgender Rezeptur hergestellt:

| 100 Gewichtsteile | des nach Beispiel 3 erhaltenen aufgearbeiteten Abfallproduktes, |
|---|---|
| 0,8 Gewichtsteile | Polysiloxanpolyoxyalkylenblockmischpolymerisat-Stabilisator, |
| 4 Gewichtsteile | Wasser, |
| 0,2 Gewichtsteile | Zinnoctoat, |
| 0,2 Gewichtsteile | Dimethyläthanolamin, |
| 52,2 Gewichtsteile | Toluoldiisocyanat mit einem Isomerenverhältnis 80/20. |

Es entstand ein Schaum mit offenen Zellen, der ein Raumgewicht von 21,8 kg/m³ aufwies. Die physikalischen Eigenschaften des Schaumes, wie Härte, Raumgewicht, Reißfestigkeit und Belastbarkeit entsprechen den technischen Anforderungen.

## Beispiel 4

Analog Beispiel 1 wurde ein Polyesterschaum, ein Integralschaum und ein weiterer Polyätherschaum erfindungsgemäß aufgearbeitet. Die Ergebnisse sind in der folgenden Tabelle zusammengestellt.

Als Alkylenoxid wurde Propylenoxid verwendet.

| Schaumart | Gewichts-verhältnis Schaum : Al-kylenoxid | Reaktionszeit | Reaktions-temperatur | OH-Zahl |
|---|---|---|---|---|
| Polyesterschaum | 1 : 4 | 9 h | 120°C | 245 |
| Integralschaum | 1 : 3 | 10 h | 120°C | 64 |
| Polyätherschaum | 1 : 1 | 10 h | 120°C | 165 |

Beispiel 5

In diesem Beispiel wird die Aufarbeitung eines Abfallstoffes beschrieben, der durch Umsetzung von Toluoldiisocyanat mit Wasser erhalten worden war. Der aus Polyphenylharnstoff bestehende Abfallstoff wurde in 200 ml Propylenoxid 10 h auf 110°C erhitzt. Danach wurde das überschüssige Propylenoxid entfernt. Es entstand eine hochviskose homogene Flüssigkeit mit einer OH-Zahl von 301 mg KOH/g, die z. B. zur Herstellung eines Polyurethanhartschaumes zur Verwendung als Isoliermaterial geeignet ist.

**Patentansprüche**

1. Verfahren zur schonenden Aufarbeitung von Abfällen, die aus Umsetzungsprodukten von Isocyanatgruppen enthaltenden organischen Verbindungen mit Alkoholen und/oder Wasser bestehen, wobei man die Abfälle mechanisch zerkleinert und auf die Abfälle bei erhöhter Temperatur aliphatische Sauerstoffverbindungen einwirken läßt, dadurch gekennzeichnet, daß man auf die zerkleinerten Abfälle in einem geschlossenen Reaktor bei Temperaturen von 120 bis 200°C, mindestens 20 Gew.-%, bezogen auf die Abfälle, Äthylenoxid und/oder Propylenoxid einwirken läßt und danach gegebenenfalls nichtumgesetztes Alkylenoxid entfernt.

2. Verfahren nach Anspruch 1, dadurch gekennzeichnet, daß man auf die Abfälle 100 Gew.-%, bezogen auf die Abfälle, Äthylenoxid und/oder Propylenoxid einwirken läßt.

3. Verfahren nach Anspruch 1 oder 2, dadurch gekennzeichnet, daß man die zerkleinerten Abfälle in einem Polyol in Mengen von 10 bis 50 Gew.-%, bezogen auf Polyol, dispergiert und dann mit dem Äthylenoxid und/oder Propylenoxid umsetzt.

**Claims**

1. Process for working up wastes which consist of reaction products of organic compounds containing isocyanate groups with alcohols and/or water, under mild conditions, the wastes being mechanically comminuted and aliphatic oxygen compounds being caused to act on the wastes at an elevated temperature, characterised in that at least 20% by weight, relative to the wastes, of ethylene oxide and/or propylene oxide are caused to act on the comminuted wastes in a closed reactor at temperatures from 120 to 200°C and, if appropriate, unconverted alkylene oxide is then removed.

2. Process according to Claim 1, characterised in that 100% by weight, relative to the wastes, of ethylene oxide and/or propylene oxide are caused to act on the wastes.

3. Process according to Claim 1 or 2, characterised in that the comminuted wastes are dispersed in a polyol in quantities of 10 to 50% by weight, relative to the polyol, and are then reacted with the ethylene oxide and/or propylene oxide.

**Revendications**

1. Procédé pour le traitement ménagé de déchets consistant en produits de réaction de composés organiques contenant des groupes isocyanates avec des alcools et/ou de l'eau, dans lequel on soumet les déchets à une fragmentation mécanique et on fait agir sur les déchets des composés aliphatiques oxygénés à température élevée, le procédé se caractérisant en ce que l'on fait agir sur les déchets fragmentés, dans un réacteur fermé, à des températures de 120 à 200°C, au moins 20% en poids d'oxyde d'éthylène et/ou d'oxyde de propylène, par rapport aux déchets, et on élimine ensuite le cas échéant l'oxyde d'alkylène non converti.

2. Procédé selon la revendication 1, caractérisé en ce que l'on fait agir sur les déchets 100% en poids, par rapport aux déchets, d'oxyde d'éthylène et/ou d'oxyde de propylène.

3. Procédé selon la revendication 1 ou 2, caractérisé en ce que l'on disperse les déchets fragmentés dans un polyol, en quantités de 10 à 50% du poids du polyol, puis on fait réagir avec l'oxyde d'éthylène et/ou l'oxyde de propylène.